# EUROPÄISCHE PATENTSCHRIFT

(11) **EP 1 336 563 B1**
(45) Veröffentlichungstag und Bekanntmachung des Hinweises auf die Patenterteilung: **27.04.2005**
(21) Anmeldenummer: 03002544.9
(22) Anmeldetag: 05.02.2003
(51) Int. Cl.: B64D 9/00

(54) **Montageeinrichtung für ein Riegelelement**
Mounting device for clamping elements
Dispositif de montage pour élément de verrouillage

(30) Priorität: 13.02.2002 DE 10205871
(43) Veröffentlichungstag der Anmeldung: 20.08.2003
(73) Patentinhaber: Telair International GmbH, 83714 Miesbach (DE)
(72) Erfinder: Huber, Thomas, 83727 Schliersee (DE)
(74) Vertreter: Bohnenberger, Johannes, Dr.

(56) Entgegenhaltungen:
- DE-A- 2 161 735
- DE-A- 4 210 703
- DE-A- 19 525 392
- DE-C- 19 544 796
- US-A- 5 564 654

## Beschreibung

Die Erfindung betrifft eine Montageeinrichtung für ein Funktionselement, insbesondere ein Riegelelement, eine Führungseinrichtung oder eine Fördereinrichtung, das auf einem Boden eines Frachtraums eines Flugzeugs befestigbar ist, nach dem Oberbegriff des Patentanspruches 1.

Frachtflugzeuge laden Frachtstücke üblicherweise in "single row", "side by side" oder "tripple row" Konfiguration. Die Frachtstücke werden also entweder einreihig, zweireihig oder dreireihig nebeneinander in Längsrichtung des Flugzeugrumpfes im Frachtraum geladen. Hierbei gibt es auch Varianten und zwar sogenannte "Multiple Choice Systeme", welche zwei oder drei Kombinationen gleichzeitig erlauben. Die einreihige Variante ist üblicherweise immer auf der Mittellinie (center line) des Flugzeuges angeordnet, da man hiermit nicht nur das Gewichts-/Balance-Problem, also den Schwerpunkt im Griff hat, sondern auch die größte freie Höhe für die Frachtstücke erzielen kann.

Bei B 747-Frachtern gibt es bisher nur die side-by-side Konfiguration. Wenn Frachtstücke auf der Mittellinie des Flugzeuges geladen werden sollen, dann müssen diese bisher aufwendig mit Haltegurten am Boden in den Sitzschienen verzurrt werden. Dies kann bei schweren Lasten, wie z. B. Triebwerkspaletten bis zu mehreren Stunden pro Frachtstück dauern. Zusätzlich kann der Bereich um diese Frachtstücke (es handelt sich hier insbesondere um Paletten) nicht mehr genutzt werden, da dieser Bereich durch schräg nach unten laufende Haltegurte verstellt wird.

Ein großes Problem liegt hierbei darin, dass man zwar Adapter und entsprechende Strukturen, also entsprechende Halteeinrichtungen in den Frachtraumboden einbringen könnte. Dies erfordert aber erhebliche Konstruktionsänderungen und einen enormen Kostenaufwand.

Eine Möglichkeit zur Lösung des Problems beim Verstauen voluminöser und schwerer Ladungen bietet ein System nach Art eines Spinnennetzes aus Extrusionsprofilen, die über den Frachtraumboden zwischen die bereits vorhandenen Teile des Frachtraumsystems hindurch verteilt und eingebaut werden, um über dieses System die Lasten zu befestigen. Ein solches System führt aber dazu, dass der Bereich um die zu sichernden Frachtstücke blockiert wird, sodass einerseits der Platz neben dem Ladungsbereich des entsprechenden Frachtstückes nicht genutzt werden kann und darüber hinaus das "Spinnennetzsystem" ausgebaut werden muss, wenn man den restlichen Ladebereich des Flugzeuges befüllen/entleeren will.

Besonders wichtig ist (insbesondere bei der B 747) der Bereich vor der seitlichen Frachtladetür und hinter der Nasenladetür sowie (bei allen Flugzeugen) der Stellplatz über dem Flügelkasten, da dort fast das doppelte Gewicht pro Frachtstück im Vergleich zum restlichen Bereich geladen werden kann. Aus den obigen Gründen, also insbesondere aus Gründen der von den Flugzeugbauern vorgegebenen Anbringung von Halteeinrichtungen, ist eine Befestigung von Frachtstücken in diesen Bereichen, insbesondere in der center line nur in unökonomischer Weise möglich.

Der Erfindung liegt die Aufgabe zu Grunde, eine Montageinrichtung der eingangs genannten Art dahingehend weiterzubilden, dass bei vorhandenen Halteeinrichtungen eine erhöhte Variabilität bei der Befestigung, also Ausnützbarkeit eines vorgegebenen Flugzeugfrachtraumes ermöglicht wird.

Diese Aufgabe wird durch eine Montageeinrichtung nach Anspruch 1 gelöst. Eine die Aufgabe lösende Verwendung von Montageeinrichtungen ergibt sich aus Anspruch 10.

Ein wesentlicher Punkt der Erfindung liegt darin, dass nicht wie in üblicher Weise die Montageinrichtungen für Funktionselemente, insbesondere Riegelelemente, Führungseinrichtungen oder Fördereinrichtungen alleine benutzt werden, die vom Flugzeughersteller in ihrer Art vorgegeben sind, als da sind Sitzschienen (siehe z.B. DE 195 25 392 A1) oder sogenannte lock trays (siehe z.B. DE 195 44 796 C1), es werden vielmehr verschiedenartige Halteeinrichtungen zur Montage des Basissockels verwendet, die üblicherweise in Flugzeugen vorgesehen sind. Der erfindungsgemäße Basissockel schlägt sozusagen eine Brücke zwischen den verschiedenartigen Halteeinrichtungen, wobei die Funktionselemente an jede Stelle des Basissockels montierbar sind, sodass eine variable Anpassung an die zu befestigenden Frachtstücke erzielt werden kann.

Insbesondere wird die Aufgabe durch eine Montageeinrichtung für ein Funktionselement gelöst, insbesondere für ein Riegelelement, eine Führungseinrichtung oder eine Fördereinrichtung, das auf einem Boden eines Frachtraums eines Flugzeuges befestigbar ist. Es sind lösbare Befestigungseinrichtungen zum Befestigen des Funktionselements an Halteeinrichtungen vorgesehen, die am Boden angebracht sind. Die Erfindung zeichnet sich dadurch aus, dass die Montageeinrichtung einen Basissockel umfasst, der insbesondere an einander gegenüberliegenden Seiten verschiedenartige Befestigungseinrichtungen aufweist, von denen eine erste Befestigungseinrichtung an einer ersten Art von Halteeinrichtüngen und zugleich eine zweite Befestigungseinrichtung an einer zweiten Art von Halteeinrichtungen befestigbar ist, sodass der Basissockel den Zwischenraum zwischen den beiden Halteeinrichtungen überbrückt. Dadurch ist die genannte Abmessungs-Wahlfreiheit gegeben.

Vorzugsweise sind die beiden Befestigungseinrichtungen zur Aufnahme von Lasten aus, zumindest teilweise sich unterscheidenden Richtungen ausgebildet. Wenn - wie vorzugsweise vorgesehen - die erste Halteeinrichtung eine Sitzschiene und die zweite Halteeinrichtung ein lock tray ist, so weisen die Schienen seitliche sowie vertikale (senkrecht zum Frachtraumboden wirkende) Belastbarkeiten auf, während die lock trays nur Kräfte aufnehmen können, welche in Flugzeuglängsrichtung oder senkrecht zum Frachtraumboden wirken. Dadurch aber, dass die Basissockel an beiden Halteeinrichtungen befestigt sind und die Funktionselemente entsprechend der angestrebten Lastaufnahme positionierbar sind, können Lasten in den notwendigen Richtungen belastbar befestigt werden.

Die Basissockel weisen vorzugsweise eine Anpasseinrichtung auf, die mit einem vorgegebenen Teilungsraster derart versehen ist, dass eine Funktionseinrichtung ein vorgegebenes Rastermaß der ersten und zweiten Halteeinrichtungen unterteilbar in Anpassung an eine vorgegebene Abmessung eines Frachtstücks am Basissockel montierbar ist. Typische Frachtstücke sind Paletten, welche entlang der Längsachse Verriegelungsschlitze mit der Breite 3,5'' und in einer 20,125'' Teilung aufweisen. Die Sitzschienen, wie auch die lock trays haben jedoch nur eine Standard-1" Teilung. Mit der Anpassungseinrichtung werden die Funktionselemente, insbesondere Riegelelemente in der Basisplatte unterschiedlich positionierbar angebracht. Bevorzugterweise ist der verschiebbare Teil (also das Funktionselement) jeweils mit 16 Bohrungen ausgestattet. Hiervon werden je acht auf jeder Seite vorgesehen. Alle diese Bohrungen sind mit einem Gewindestift mit zylindrischem Ansatz ausgestattet. Die Basissockel wiederum weisen Bohrungen auf, jedoch nur vier pro Seite. Die Teilung der 16 Gewindestiftbohrungen gegenüber den insgesamt acht Bohrungen des Basissockels wird vorzugsweise so gewählt, dass das Funktionselement, also insbesondere ein Riegelelement innerhalb des Basissockels je nach dem, welche der Gewindestifte "runtergeschraubt werden" sich im 0,25''-Raster verschieben lässt. Da nur jedes zweite Funktionselement vorzugsweise als Riegel ausgestattet ist, ergibt sich somit eine Teilung der verwendeten Riegel entsprechend den dazugehörigen Verriegelungsschlitze am Frachtstück bzw. an einer Palette von 40,25''. Durch die 1" Teilung des lock trays und die Möglichkeit, die Funktionselemente im 0,25''-Raster zu verschieben, ist es somit möglich, die gewünschte Teilung relativ zu den (genormten) Palettenschlitzen bzw. Befestigungselementen an den Frachtstücken zu erzielen. Eine gewisse Toleranz ist weiterhin dadurch erzielbar, dass z. B. bei Riegelelementen deren Verriegelungskralle schmaler ist (1,25'') als die entsprechenden Verriegelungsschlitze im Frachtstück bzw. in der Palette (3,5''). Dies bedeutet, dass man derartige Riegelelemente entweder im 20''-Raster oder im 21''-Raster einbauen kann.

Vorzugsweise umfasst mindestens eine der beiden Befestigungseinrichtungen eine Vielzahl von Einzelbefestigungselementen, die jeweils einzeln in Befestigungsgegenstücken an diesen Befestigungseinrichtungen ankoppelbar sind. Mit dieser Ausgestaltung ist es beispielsweise möglich, eine Befestigung an einem lock tray auch dort vorzunehmen, wo bereits ein Palettenriegel oder eine PDU (power drive unit = Rollenantriebseinheit) im lock tray eingebaut ist. Diejenigen Einzelbefestigungselemente, welche an solchen Befestigungsgegenstücken (z.B. Bohrungen) zu liegen kommen, an welchen schon Befestigungseinrichtungen der PDU vorliegen, werden nicht "aktiviert", während die dem Befestigungsraster entsprechenden Elemente, welchen "freie" Befestigungsgegenstücke (Bohrungen) gegenüberliegen, angekoppelt werden.

Vorzugsweise sind die Einzelbefestigungsstücke selbsttätig ankoppelbar oder inaktivierbar, sie sind also insbesondere als federbelastete Stifte oder dergleichen bewegbare Befestigungselemente zum Einrasten in die als Öffnungen/Bohrungen ausgebildeten Befestigungsgegenstücke der jeweilige Halteeinrichtungen ausgebildet. Dadurch ist eine besonders einfache Montage möglich.

Vorzugsweise sind an mindestens einer der beiden Seiten des Basissockels beide Befestigungseinrichtungen zur wahlweisen Benutzung angebracht. Dadurch ist es möglich, die Basissockel auch zu wenden, sodass in einfacher Weise eine vielseitige Verwendbarkeit gegeben ist.

Vorzugsweise weist der Basissockel Montageeinrichtungen für Fördereinrichtungen, insbesondere Kugelelemente zusätzlich zu den vorgesehenen Funktionselementen, insbesondere zusätzlich zu Riegelelementen auf. Dadurch wird eine verbesserte und die Benutzbarkeit in der Anordnung erweiternde Eigenschaft gegeben.

Die Montageeinrichtung ist vorzugsweise als "Bausatz" ausgebildet und umfasst mehrere Basissockel, in denen zwei Arten von Riegelelementen, z.B. starre und fortschwenkbare Riegel oder Riegel zum Befestigen von Frachtstücken gegenüber Bewegungen vorgesehen sind, die einerseits in Richtung der beiden einander gegenüberliegenden Seiten der Basissockel und senkrecht zu dieser Richtung anbringbar sind. Es kann auf diese Weise mit ein und derselben Art von Basissockeln eine vollständige Befestigung eines Frachtstückes auch in solchen Bereichen vorgenommen werden, in denen üblicherweise eine Befestigung nicht vorgesehen ist, also z. B. im center line-Bereich.

Die eingangs genannte Aufgabe wird auch durch die Verwendung von Montageeinrichtungen der geschilderten Art gelöst, um eine Transportbefestigung von Frachtstücken im center line-Bereich eines Frachtraums eines Flugzeugs zu ermöglichen.

Nachfolgend wird die Erfindung anhand von Abbildungen näher erläutert. Hierbei zeigen
Figur 1 eine erste bevorzugte Ausführungsform einer Montageeinrichtung,
Figur 2 eine zweite bevorzugte Ausführungsform einer Montageeinrichtung,
Figur 3 eine weitere Form einer Montageeinrichtung, wobei diese insbesondere dazu bestimmt ist, die Beladung mit Frachtstücken zu erleichtern.

In der nachfolgenden Beschreibung werden Vergleich und gleich wirkende Teile derselben Bezugsziffern verwendet.

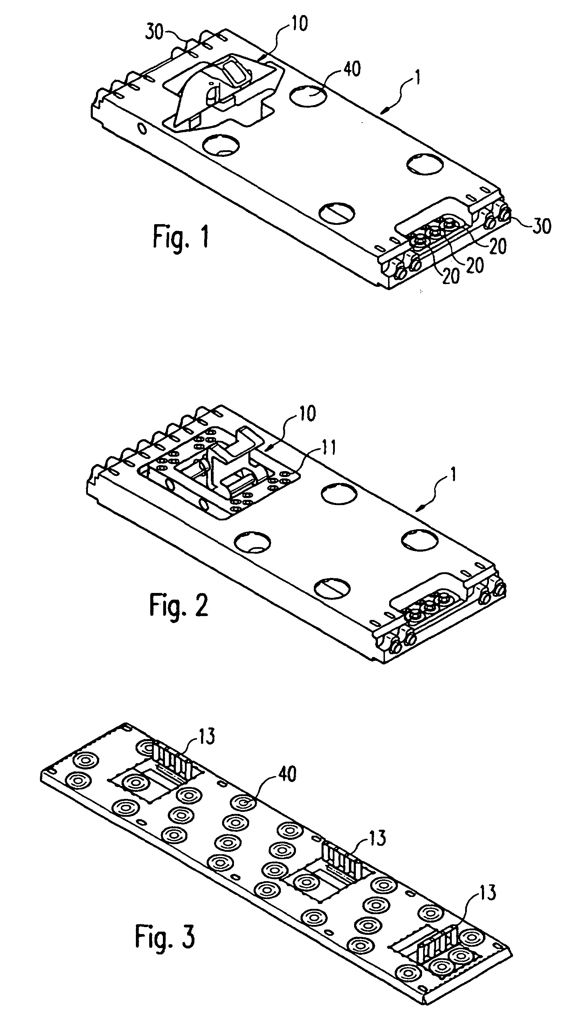

Wie in Figur 1 gezeigt, umfasst die Montageeinrichtung einen Basissockel 1, der als im wesentlichen rechteckige Platte ausgebildet ist. Im Basissockel 1 ist ein Funktionselement 10 angeordnet, im Beispiel der Figur 1 ein Riegel mit einer (beim seitlichen Anfahren) fortschwenkbaren Nase. Derartige Riegel sind allgemein bekannt.

An einer seiner Schmalseiten sind erste Befestigungseinrichtungen 20 vorgesehen, nämlich Bolzen, die in Sitzschienen verankerbar sind, wie sie beispielsweise aus der DE 195 25 392 A1 bekannt sind. An der gegenüberliegenden Seite sind zweite Befestigungseinrichtungen 30 vorgesehen, welche in Bohrungen sogenannter lock trays eingerastet werden können, die in Frachtflugzeugen auf dem Boden zum Montieren von Rollenantriebseinheiten, Riegelelementen oder anderen Funktionselementen üblicherweise verwendet werden. Diese lock trays sind an ihren Seitenwangen mit derartigen Bohrungen in einer 1" Teilung versehen. Um nun auch dort einen Basissockel an ein lock tray ankoppeln zu können, wo z.B. eine Rollenantriebseinheit schon montiert ist und darum die eine oder andere Bohrung des lock tray "besetzt" ist, sind die Stifte der zweiten Befestigungseinrichtung 30 verschiebbar im Basissockel 1 gelagert und durch eine Feder (nicht gezeigt) nach außen beaufschlagt. Trifft somit ein derartiger Befestigungsstift auf ein besetztes" Loch im lock tray, so wird er in den Basissockel 1 zurückgeschoben, während die übrigen Befestigungsstifte in den Bohrungen im lock tray einrasten.

Im Basissockel 1 sind weiterhin Kugelelemente 40 angebracht, welche eine Transporteinrichtung für Frachtstücke bilden. Auf diese Weise wird die Montageeinrichtung gleichzeitig einem weiteren Zweck zugeführt.

Der Einbau einer solchen Montageeinheit erfolgt nun derart, dass man zunächst einen noch unbefestigten lock tray nach außen zieht, dann die Montageeinrichtung mit ihren Stiften von außen an bzw. in die seitlichen Bohrungen des lock trays einführt und zuletzt den lock tray von außen wieder an die nunmehr positionierte Montageeinrichtung heranschiebt, bis die gefederten Stifte einrasten und der lock tray ebenfalls wieder in seiner Rastposition am Boden sitzt. Auf diese Weise kann somit die Montageeinrichtung zwischen zwei lock trays befestigt werden.

Bei einer Befestigung einer Montageeinrichtung zwischen einem lock tray und einer Sitzschiene wird zunächst die Montageeinrichtung mit ihren zweiten Befestigungseinrichtungen 20, also mit den Stiften in die Bohrungen des lock tray eingeführt und dann nach unten abgesenkt, so dass die ersten Befestigungseinrichtungen 20 in den Sitzschienen verriegelt werden können.

Die in Figur 2 gezeigte Ausführungsform in der erfindungsgemäßen Montageeinrichtung unterscheidet sich von der nach Figur 1 zunächst durch die Art des Riegels 10, der dort eingebaut ist. Es handelt sich hierbei um einen zwar herunterklappbaren, aber ansonsten starren Riegel, der darüber hinaus in einer Ausnehmung des Basissockels 1 justierbar befestigt ist. Hierzu dienen (beim Ausführungsbeispiel insgesamt 16) Bohrungen mit darin sitzenden Gewindestiften 11 mit einem zylindrischen Ansatz. In dem Basissockel 1 sind wiederum Bohrungen angebracht, jedoch nur 4 pro Seite, wobei die Teilung der 16 Gewindestiftbohrungen gegenüber den insgesamt 8 Bohrungen in dem Basissockel so gewählt sind, dass das Riegelelement 10 innerhalb des Basissockels sich im 0,25" Raster verschoben montieren lässt, je nachdem, welche der Gewindestifte 11 eingeschraubt werden. Auf diese Weise ist es möglich, trotz des gröberen (1") Rasters der lock trays und der Sitzschienen eine Anpassung an andere Normen der Frachtstücke zu erzielen, wie dies bereits eingangs beschrieben wurde.

Bei dem in Figur 3 gezeigten Element handelt es sich um eine Art von Kugelmatte, die zusätzlich mit Führungsrollen 13 versehen ist, die um senkrechte Achsen drehen. Mit derartigen Führungsrollen 13 lassen sich auch schwere Frachtstücke exakt und gefahrlos an ihren Aufstellort bringen. Bei Nichtgebrauch können die Führungsrollen 13 unter die Ladeebene abgeklappt werden.

### Bezugszeichenliste

- 1: Basissockel,
- 10: Funktionselement,
- 11: Gewindestift,
- 13: Führungsrolle,
- 20: 1. Befestigungseinrichtung,
- 30: 2. Befestigungseinrichtung,
- 40: Kugelelement

## Patentansprüche

1. Montageeinrichtung für ein Funktionselement (10), insbesondere ein Riegelelement, eine Führungseinrichtung oder eine Fördereinrichtung, das auf einem Boden eines Frachtraumes eines Flugzeugs befestigbar ist, mit lösbaren Befestigungseinrichtungen (20, 30) zum Befestigen des Funktionselementes (10) an Halteeinrichtungen, die am Boden angebracht sind, wobei die Montageeinrichtung einen Basissockel (1) umfasst, der insbesondere an einander gegenüberliegenden Seiten verschiedenartige Befestigungseinrichtungen (20, 30) aufweist
**dadurch gekennzeichnet, dass** eine erste Befestigungseinrichtung (20) an einer ersten Art von Halteeinrichtung und zugleich eine zweite Befestigungseinrichtung (30) an einer zweiten Art von Halteeinrichtung befestigbar ist.

2. Montageeinrichtung nach Anspruch 1,
**dadurch gekennzeichnet, dass** die beiden Befestigungseinrichtungen (20, 30) zur Aufnahme von Lasten aus zumindest teilweise sich unterscheidenden Richtungen ausgebildet sind.

3. Montageeinrichtung nach einem der vorhergehenden Ansprüche,
**dadurch gekennzeichnet, dass** die erste Halteeinrichtung (20) eine Sitzschiene und die zweite Halteeinrichtung (30) ein lock tray ist.

4. Montageeinrichtung nach einem der vorhergehenden Ansprüche,
**dadurch gekennzeichnet, dass** der Basissockel (1) eine Anpassungseinrichtung (11) aufweist, die mit einem vorgegebenen Teilungsraster derart versehen ist, dass eine Funktionseinrichtung (10) ein vorgegebenes Rastermaß der ersten und zweiten Halteeinrichtungen unterteilend in Anpassung an eine vorgegebene Abmessung eines Frachtstücks am Basissockel montierbar ist.

5. Montageeinrichtung nach einem der vorhergehenden Ansprüche,
**dadurch gekennzeichnet, dass** mindestens eine der beiden Befestigungseinrichtungen (20, 30) eine Vielzahl von Einzelbefestigungselementen umfasst, die jeweils einzeln in Befestigungsgegenstücken an den jeweiligen Halteeinrichtungen ankoppelbar sind.

6. Montageeinrichtung nach Anspruch 5,
**dadurch gekennzeichnet, dass** die Einzelbefestigungsstücke selbsttätig ankoppelbar oder inaktivierbar, insbesondere als federbelastete Stifte odgl. bewegbare Befestigungselemente zum Einrasten in die als Öffnungen/Bohrungen ausgebildeten Befestigungsgegenstücke der jeweiligen Halteeinrichtungen ausgebildet sind.

7. Montageeinrichtung nach einem der vorhergehenden Ansprüche,
**dadurch gekennzeichnet, dass** an mindestens einer der beiden Seiten des Basissockels (1) beide Befestigungseinrichtungen (20, 30) zur wahlweisen Benutzung angebracht sind.

8. Montageeinrichtung nach einem der vorhergehenden Ansprüche,
**dadurch gekennzeichnet, dass** der Basissockel Montageeinrichtungen für Fördereinrichtungen, insbesondere Kugelelemente (40) zusätzlich zu den Funktionselementen (10) aufweist.

9. Montageeinrichtung nach einem der vorhergehenden Ansprüche,
**dadurch gekennzeichnet, dass** mehrere Basissockel (1) vorgesehen sind, in denen verschiedene Riegelelemente (10) zum Befestigen von Frachtstücke anbringbar sind.

10. Verwendung einer Montageeinrichtung nach einem der vorhergehenden Ansprüche zur Transportbefestigung von Frachtstücken in einem center line Bereich eines Frachtraums eines Flugzeugs.

## Claims

1. Mounting device for a functional element (10), in particular a latch, a guide device or a conveying device, which can be attached to a floor of a cargo area of an aircraft, with detachable attachment mechanisms (20, 30) for attaching the functional element (10) to holding devices, which are fitted on the floor, the mounting device comprising a base plinth (1), which exhibits different types of attachment mechanisms (20, 30) in particular on opposing sides, **characterized in that** a first attachment mechanism (20) can be attached at a first type of holding device and at the same time a second attachment mechanism (30) can be attached at a second type of holding device.

2. Mounting device according to claim 1, **characterized in that** the two attachment mechanisms (20, 30) are formed to take up loads from at least partly differing directions.

3. Mounting device according to one of the preceding claims, **characterized in that** the first holding device (20) is a seat rail and the second holding device (30) is a lock tray.

4. Mounting device according to one of the preceding claims, **characterized in that** the base plinth (1) has an adapter device (11), which is provided with a predetermined spacing grid such that a functional device (10) can be mounted on the base plinth dividing a predetermined grid dimension of the first and second holding devices in adaptation to a predetermined dimension of a cargo item.

5. Mounting device according to one of the preceding claims, **characterized in that** at least one of the two attachment mechanisms (20, 30) comprises a plurality of individual attachment elements, which can each be coupled individually in attachment counterparts on the respective holding devices.

6. Mounting device according to claim 5, **characterized in that** the individual attachment pieces are formed to be able to be coupled or inactivated automatically, in particular as spring-loaded pins or similar movable attachment elements for locking into place in the attachment counterparts formed as openings/holes of the respective holding devices.

7. Mounting device according to one of the preceding claims, **characterized in that** both attachment mechanisms (20, 30) are fitted to at least one of the two sides of the base plinth (1) for optional use.

8. Mounting device according to one of the preceding claims, **characterized in that** the base plinth has mounting devices for conveying elements, in particular ball elements (40), in addition to the functional elements (10).

9. Mounting device according to one of the preceding claims, **characterized in that** several base plinths (1) are provided, in which various latches (10) can be fitted for attaching cargo items.

10. Use of a mounting device according to one of the preceding claims for the transport attachment of cargo items in a centre line area of a cargo area of an aircraft.

## Revendications

1. Dispositif de montage pour un élément fonctionnel (10), notamment un élément de verrouillage, un dispositif de guidage ou un dispositif d'entraînement, qui peut être fixé sur le plancher d'une chambre pour le fret dans un avion, comportant des dispositifs de fixation amovibles (20, 30) pour fixer l'élément fonctionnel (10) à des dispositifs de retenue, qui sont montés sur le plancher, dans lequel le dispositif de montage comprend un socle de base (1), qui possède des dispositifs de fixation de différents types (20, 30) notamment sur des côtés réciproquement opposés,
**caractérisé en ce qu'**un premier dispositif de fixation (20) peut être fixé sur un premier type de dispositif de retenue et, simultanément, un second dispositif de fixation (30) peut être fixé sur un second type de dispositif de retenue.

2. Dispositif de montage selon la revendication 1, **caractérisé en ce que** les deux dispositifs de fixation (20, 30) sont agencés de manière à recevoir des charges dans des directions au moins partiellement différentes.

3. Dispositif de montage selon l'une des revendications précédentes, **caractérisé en ce que** le premier dispositif de retenue (20) est un rail d'appui et que le second dispositif de retenue (30) est un lock tray.

4. Dispositif de montage selon l'une des revendications précédentes, **caractérisé en ce que** le socle de base (1) comporte un dispositif d'adaptation (11), qui est équipé d'un réseau de division prédéterminé, de telle sorte qu'un dispositif fonctionnel (10) peut être monté sur le socle de base avec subdivision selon un pas prédéterminé de réseau des premier et second dispositifs de retenue, d'une manière adaptée à une dimension prédéterminée d'un élément de fret.

5. Dispositif de montage selon l'une des revendications précédentes, **caractérisé en ce qu'**au moins l'un des deux dispositifs de fixation (20, 30) comprend une multiplicité d'éléments de fixation individuels, qui peuvent être couplés respectivement individuellement dans des éléments antagonistes de fixation sur les dispositifs de retenue respectifs.

6. Dispositif de montage selon la revendication 5, **caractérisé en ce que** les éléments de fixation individuels peuvent être couplés ou inactivés automatiquement, notamment sous la forme de broches chargées par des ressorts ou d'éléments de fixation déplaçables destinés à s'encliqueter dans les éléments antagonistes de fixation agencés sous la forme d'ouvertures / de perçages, des dispositifs de retenue respectifs.

7. Dispositif de montage selon l'une des revendications précédentes, **caractérisé en ce que** les deux dispositifs de fixation (20, 30) sont disposés, pour être utilisés au choix, sur au moins l'un des deux côtés du socle de base (1).

8. Dispositif de montage selon l'une des revendications précédentes, **caractérisé en ce que** le socle de base comporte des dispositifs de montage pour des dispositifs d'entraînement, notamment des éléments en forme de billes (40) en plus des éléments fonctionnels (10).

9. Dispositif de montage selon l'une des revendications précédentes, **caractérisé en ce qu'**il est prévu plusieurs socles de base (1), dans lesquels différents éléments de verrouillage (10) peuvent être montés pour fixer des éléments de fret.

10. Utilisation d'un dispositif de montage selon l'une des revendications précédentes, pour le transport d'éléments de fret dans une zone d'axe central d'une soute pour le fret dans un avion.
